(19) Europäisches Patentamt
European Patent Office
Office européen des brevets

(11) EP 4 313 385 B1

(12) **EUROPEAN PATENT SPECIFICATION**

(45) Date of publication and mention of the grant of the patent:
**26.02.2025 Bulletin 2025/09**

(21) Application number: **22717393.7**

(22) Date of filing: **24.03.2022**

(51) International Patent Classification (IPC):
***B01D 71/62*** (2006.01) ***B01D 53/22*** (2006.01)
***B01D 67/00*** (2006.01) ***B01D 69/08*** (2006.01)
***B01D 69/12*** (2006.01) ***B01D 71/64*** (2006.01)
***C08G 69/32*** (2006.01) ***C08G 73/22*** (2006.01)

(52) Cooperative Patent Classification (CPC):
**B01D 71/62; B01D 67/0011; B01D 67/0018; B01D 69/08; B01D 69/12; B01D 71/64; C08G 69/32; C08G 73/22;** B01D 53/228; B01D 61/027; B01D 2256/245; B01D 2257/504

(86) International application number:
**PCT/EP2022/057736**

(87) International publication number:
**WO 2022/207439 (06.10.2022 Gazette 2022/40)**

(54) **COMPOSITE MEMBRANES COMPRISING A SELECTIVE SEPARATION LAYER COMPRISING POLYBENZOXAZOLE**

KOMPOSITMEMBRANE MIT EINER SELEKTIVEN TRENNSCHICHT MIT POLYBENZOXAZOL

MEMBRANES COMPOSITES COMPRENANT UNE COUCHE DE SÉPARATION SÉLECTIVE COMPRENANT DU POLYBENZOXAZOLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2021 EP 21165869**

(43) Date of publication of application:
**07.02.2024 Bulletin 2024/06**

(73) Proprietor: **Evonik Operations GmbH**
**45128 Essen (DE)**

(72) Inventors:
- **PETERS, Lars**
**4852 Weyregg am Attersee (AT)**
- **LUGSTEIN, Markus**
**4851 Gampern (AT)**
- **STAUDINGER, Sabrina**
**4860 Lenzing (AT)**
- **LEHNER, Dominik**
**4623 Gunskirchen (AT)**
- **MAURER, Christian**
**63450 Hanau (DE)**
- **LEINBERGER-BALSTER, Jörg**
**4861 Aurach am Hongar (AT)**
- **LEE, Kah Peng**
**4863 Seewalchen (AT)**

(74) Representative: **Evonik Patent Association**
**c/o Evonik Industries AG**
**IP Management**
**Postcode 84/339**
**Rodenbacher Chaussee 4**
**63457 Hanau (DE)**

(56) References cited:
**KR-B1- 100 398 059** **US-A1- 2017 166 699**

- **HUAN WANG ET AL: "The evolution of physicochemical and gas transport properties of thermally rearranged polyhydroxyamide (PHA)", JOURNAL OF MEMBRANE SCIENCE, ELSEVIER BV, NL, vol. 385, 15 September 2011 (2011-09-15), pages 86 - 95, XP028105059, ISSN: 0376-7388, [retrieved on 20110921], DOI: 10.1016/J.MEMSCI.2011.09.023**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 313 385 B1

## Description

### Field of the invention

The invention is directed to a solution comprising from 0.05 to 7.5 parts by weight of a polyhydroxyamide and from 99.95 to 92.55 parts by weight of one or more alcohols, selected from isopropanol, n-propanol, and ethanol, wherein the polyhydroxyamide has a number average molecular weight Mn, determined according to the method given in the description, of from 10000 bis 120000 g/mol, preferably 35000 bis 70000 g/mol, and a polydispersity index of 2 to 9, preferably 3 to 7, to a process for preparing a hollow fiber membrane, using the solution, to the hollow fiber membrane itself and to the use of the hollow fiber membrane.

### Background of the Invention

Several publications, e.g. US 2011/0009506 A1, WO 2016/120189 A1, US 2012/00305484 A1, US 2013/0047844 A1, US2010/0326913 A1, US 2010/0331437 A1, US 2010/0133188 A1, JPS43002475B, JMS 474 (2015) 122-131 - Gas sorption and transport in thermally rearranged polybenzoxazole membranes derived from polyhydroxylamides - Young Moo Lee, JMS 385-386 (2011) 86-95 - The evolution of physiochemical and gas transport properties of thermally rearranged polyhydroxyamide (PHA), Tai-Shung Chung, Polymer 52 (2011) 5127-5138, The evolution of poly(hydroxyamide amic acid) to poly(benzoxazole) via stepwise thermal cyclization: structural changes and gas transport properties - Tai-Shung Chung, Reactive and functional polymers 127 (2018) 38-47 - Thermally rearranged polybenzoxazoles made from poly(ortho-hydroxyamide)s. Characterization and evaluation as gas separation membranes - Alberto Tena, and US8,618,244 B2 disclose the production of polybenzoxazole (PBO) by thermal rearrangement of polyhydroxyimide (PHI) at temperatures between 350 and 450 °C, where the PHI is obtained from one or more dianhydrides and one or more dihydroxydiamines. It is reported that membranes made from PBO have superior characteristics when used for separating $CH_4$ from $CO_2$. High plasticization stability when exposed to high $CO_2$ partial pressure is a further advantage of PBO compared to other known materials. Therefore, PBO is especially useful for preparing of membranes for use in the purification of natural gas.

Polyimide membranes are well known, e.g. US 2012/0123079 A1 describes polyimide membranes made of polymerization solutions, US 2016/0317981 A1 describes highly-selective polyimide membranes with increased permeance, said membranes consisting of block copolyimides, and US 2016/0144323 A1 describes a method for producing polyimide membranes.

In the publications so far, the authors studied the thermal rearrangement from PHI to PBO mainly on flat sheet samples. The use of PHI for asymmetric hollow fiber membranes and the subsequent thermal rearrangement to PBO is not described often, because of the collapse of the pores of the hollow fiber support at the temperature that needs to be used for the thermal rearrangement (350 to 450 °C). The material of the (polyimide) membrane becomes too dense and the permeance value become very low.

Not only PHIs can be rearranged thermally to become PBO. Another suitable raw material is polyhydroxyamide (PHA), obtained from one or more diacid and one or more dihydroxy diamine. Temperatures of only up to 350 °C are necessary to achieve a complete rearrangement of PHA to PBO. It therefore seems to be possible, to obtain layers of PBO on polymeric hollow fiber supports. Such approach is mentioned in US 2017166699 A1.

However, according to the known literature, PHAs are only soluble in dimethylformamide (DMF) or other aprotic dipolar solvents:

For instance, Lee et al. are reporting on synthesis and physical properties of PHA.

Lee, E.-J., Yoon, D.-S., & Choi, J.-K. (2013, November 30). Synthesis and Thermal Properties of Aromatic Poly(o-hydroxyamide)s Containing Phenylene Diimide Unit. Journal of the Korea Academia-Industrial cooperation Society. The Korea Academia-Industrial Cooperation Society. https://doi.org/10.5762/kais.2013.14.11.6029

According to Table 2, Lee et al qualified the following substances as at least partially suitable as a solvent for PHA: DMAc, NMP, DMF, DMSO, pyridine, THF, m-cresol and H2SO4.

In a similar way, SHENG-HUEI HSIAO et al explained synthesis and properties of PHA:

SHENG-HUEI HSIAO, LIANG-RU DAI: Synthesis and Properties of Novel Aromatic Poly(o-hydroxy amide)s and Polybenzoxazoles Based on the Bis(etherbenzoyl chloride)s from Hydroquinone and Its Methyl-,tert-Butyl-, and Phenyl-Substituted Derivatives. Journal of Polymer Science: Part A: Polymer Chemistry, Vol. 37, 2129-2136 (1999)

Solubility behavior is given in table II. According to that, PHA is not soluble in Ethanol, but rather in NMP, DMAc, DMF, DMSO, m-Cresol and THF.

However, the use of such solvents would result in swelling or partly solvating of the polymeric hollow fiber substrate.

From Macromolecules 2010, 43, 7657-7667, DOI 10.1021/ma1015495, Thermally rearranged (TR) Polybenzoxazole: Effects of diverse imidization routes on physical properties and gas transport behaviors - Young Moo Lee, or

Macromolecules 2002, 35, 905-911, Polyimide Membranes derived from Poly(amic acid) salt precursor polymers. 1. Synthesis and Characterization - Joyce K. Nelson, PHIs are known, that show a sufficient solubility in solvent, other than DMF or aprotic dipolar solvents, e.g. alcohols. However, the problem still exists, that the high rearrangement temperature are too high and will therefore effect the performance of the hollow fiber support.

A problem to be solved by the present invention was therefore, to provide a method to obtain hollow fiber membranes based on polyimide comprising a separation layer that comprises PBO.

SUMMARY OF THE INVENTION

Surprisingly the inventors found, that this problem is solved by the invention as claimed in the claims.

Therefore, the objectives are achieved by the invention by providing a solution comprising from 0.05 to 7.5 parts by weight of a polyhydroxyamide and from 99.95 to 92.55 parts by weight of one or more alcohols, selected from isopropanol, n-propanol, and ethanol, wherein the polyhydroxyamide has a number average molecular weight Mn, determined according to the method given in the description, of from 10000 bis 120000 g/mol, preferably 35000 bis 70000 g/mol, and a polydispersity index of 2 to 9, preferably 3 to 7.

The present invention further provides a process for preparing a hollow fiber membrane, making use of the inventive solution.

The present invention further provides a hollow fiber membrane, comprising a support hollow fiber comprising polyimide and a separation layer on the outer surface of the hollow fiber cylinder comprising polybenzoxazole and the use of the hollow fiber membrane.

The present invention has the advantage, that hollow fiber support materials, based on polymers with a Tg below 400 °C, preferably below 350 °C can be equipped with a selective layer comprising or consisting of PBO.

The present invention has the advantage, that hollow fiber membranes can be provided, that can be used in gas separation processes and organophilic nanofiltration processes, especially for the separation of $CO_2$ from $CH_4$ or $O_2$ from $N_2$.

The present invention has the advantage, that hollow fiber support materials can be equipped with PBO that are swelling or partly solvating in DMF or other aprotic dipolar solvents.

The hollow fiber membrane of the invention has the advantage of high permeance and high selectivity, especially regarding $CO_2$ and $CH_4$ or $O_2$ and $N_2$.

As further advantage we surprisingly found, that the preferred polyimide of the hollow fiber substrate and the PHA coating show an almost identical shrinkage behavior during the thermal treatment. Therefore, no delamination takes place between the substrate and the coating during the thermal treatment. Thus, a more consistent quality with enhanced gas separation proporties is produced during preparation of the composite.

The hollow fiber membrane according to the present invention shows almost the same mechanical characteristics as the hollow fiber membrane used as hollow fiber support but has significantly better gas separation properties.

DETAILED DESCRIPTION OF THE INVENTION

The solutions, membranes, processes, and uses according to the invention are described by way of example hereinafter, without any intention that the invention be restricted to these illustrative embodiments. When ranges, general formulae or classes of compounds are specified below, these are intended to encompass not only the corresponding ranges or groups of compounds which are explicitly mentioned but also all subranges and subgroups of compounds which can be obtained by leaving out individual values (ranges) or compounds. Where documents are cited in the context of the present description, their content shall fully form part of the disclosure content of the present invention, particularly in respect of the matters referred to. Percentages specified herein below are by weight unless otherwise stated. Where average values are reported hereinafter, these are the numerical average, unless stated otherwise. Where properties of a material are referred to hereinafter, for example viscosities or the like, these are the properties of the material at 25°C, unless stated otherwise. Where chemical (empirical) formulae are used in the present invention, the specified indices may be not only absolute numbers but also average values.

The present invention is directed to a solution comprising 0.05 to 7.5 parts by weight of a polyhydroxyamide and from 99.95 to 92.55 parts by weight of one or more alcohols, selected from isopropanol, n-propanol (1- or 2-propanol), and ethanol, wherein the polyhydroxyamide has a number average molecular weight Mn, determined according to the method given in the description in the example section, of from 10000 to 120000 g/mol, preferably 35000 to 70000 g/mol, and a polydispersity index of 2 to 9, preferably 3 to 7.

Preferably the solution of the invention comprises of from 90 to 100 % by weight of isopropanol based on the total amount of alcohols, selected from isopropanol, n-propanol, and ethanol, present in the solution.

More preferably the solution of the present invention comprises from 0.1 to 5 parts by weight, most preferably from 1 to 2.5 parts by weight of a polyhdroxyamide and from 99.9 to 95 parts by weight, most preferably from 97.5 to 99

parts by weight of one or more alcohols, selected from isopropanol, n-propanol, and ethanol, preferably of isopropanol.

The polyhydroxyamides are preferably based on dihydroxyamines and diacids or their derivates, more preferably on 4,4'-(hexafluoroisopropylidene)bis(2-aminophenol) (bisAPAF) or 3,3-dihydroxybenzidine and isophthalic acid or terephthalic acid or their chlorides.

In the solution according to the present invention the polyhydroxyamide is preferably of formula **(I)**

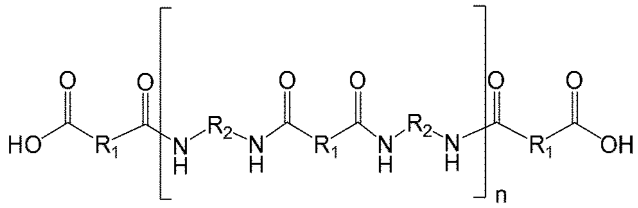

(I)

with n from 10 to 10000, preferably 20 to 1000, $R_2$ a hydro carbon radical comprising at least two hydroxyl-groups, and optionally one or more halogen-radicals, more preferably fluorine-radicals, and $R_1$ a hydrocarbon radical, more preferably a hydrocarbon radical comprising of from 2 to 12, most preferably from 4 to 8 carbon atoms. The radical $R_2$ preferably comprises two aromatic rings and two $CF_3$-Groups with the hydroxyl-groups being in ortho-position to the NH-group. The radial $R_1$ is preferably an aromatic ring comprising 6 carbon atoms.

In the solution according to the present invention the polyhydroxyamide is more preferably of formula (II)

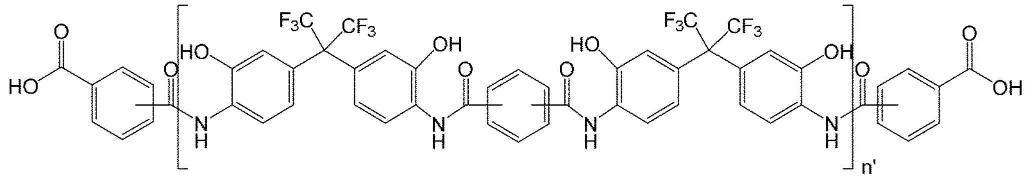

(II)

with n = 10 to 5000, preferably 20 to 1000.

In the solution according to the present invention the polyhydroxyamide is most preferably of formula (IIa) or (IIb), more preferably of formula (IIa)

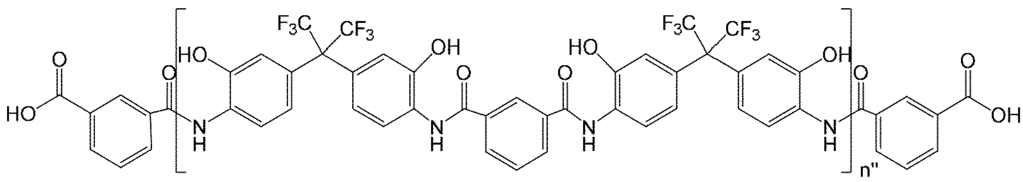

(IIa)

with n = 10 to 1000, preferably 20 to 1000

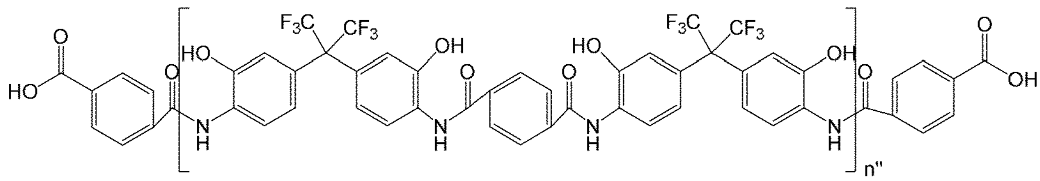

(IIb)

with n =10 to 1000, preferably 20 to 1000.

The solution of the present invention can be obtained by dissolving the polyhydroxyamide in one or more alcohol, selected from isopropanol, n-propanol, and ethanol, preferably in isopropanol. The dissolving can be supported by vigorous stirring. The amount of polyhdroxyamide and alcohol used can be in the range as given above. The solution obtained may be filtered using a paper filter, especially a 2 $\mu$m paper filter to separate of unsolved solids.

A method for preparing of inventive solution is yet another subject of present invention. Such process comprises at least the following steps:

a) Providing at least one alcohol selected from the group consting of isopropanol, n-propanol and ethanol;

b) Providing a polyhydroxyamide having a number average molecular weight $M_n$, determined according to the method given in the description, said average molecular weight $M_n$ ranging from 10000 to 120000 g/mol or from 35000 to 70000 g/mol, wherein said polyhydroxyamide having a polydispersity index of 2 to 9 or of 3 to 7;
c) Dissolving said polyhydroxyamide in said alcohol.

The solution of the present invention might be used to prepare coatings comprising polyhydroxyamides, especially coatings on the surface of membranes, preferably of asymmetric membranes, and more preferably on asymmetric hollow fiber membranes. When the coatings are prepared on the surface of asymmetric membranes, the coating is preferably prepared on the side having the smaller pores.

A hollow fiber membrane is a certain design of a membrane having a substantially cylindrical shape with a circular cross section and a central bore. In most cases, the feed is fed into the bore at fiber's first end, the permeate is withdrawn from the outside circumference of the fiber and the retentate is withdrawn from the bore at the second end of the fiber. If a hollow fiber membrane is constructed as a composite membrane, a substrate defines the cylindrical shape with the bore while a coating is applied on the outer circumference of the substrate. The coating can be applied on the inner surface of the bore as well. In most cases, the coating is the predominately separation active component of the composite membrane, while the substrate behaves passively. However, within some composite membranes, the substrate contributes to the separating effect as well. In technical applications, a plurality of hollow fiber membranes are parallelized in a bunch with a single feed, permeate and retentate port. Such hollow fiber bunches are called hollow fiber module.

The process according to the invention for preparing a hollow fiber membrane comprises a step of coating a hollow fiber on the outside with a solution of the invention as described above. The outside of the hollow fiber is preferably the outer side of the cylinder build by the hollow fiber. The coating may preferably be done by dip-coating.

The hollow fiber used as hollow fiber support can be any hollow fiber known in the art. Preferably the hollow fiber support is based on a material, preferably a polymer, having a Tg of more than 250 °C, more preferably of from 300 to 450 °C, and most preferably of from 325 to 425 °C. Preferred hollow fibers used are polyimide hollow fibers, in particular those polyimide hollow fibers having a permeance of more than 500 GPU $N_2$, preferably in the range of 2000 to 20000 GPU $N_2$ and the hollow fiber material has a glass transition temperature Tg > 300°C, preferably Tg > 350 determined according to the method given in the description.

Suitable polymers are for example polyimides, preferably those that are sold under the brand P84® by Evonik Industries AG and its subsidiaries. Preferable hollow fibers coated according to the invention are polyimide hollow fibers. The ability of coating polyimide fibers with PHA is a notable benefit of present invention, as polyimide is swelling or dissolving in DMF or aprotic dipolar solvents.. Thus, coating polyimide hollow fibres with Polyhydroxyamides or Polyhydroxyimides out of solutions in DMF is not possible

The preparation of suitable hollow fibers is disclosed for example in WO 2011/009919 (US2012/0123079A1) and WO 2014/202324 (US 2016/0317981 A1). The hollow fibres are prepared from a mixture of 3,3',4,4' benzophenonetetracarboxylic acid dianhydride and 1,2,4,5-benzenetracarboxylic acid dianhydride (= PMDA) and a mixture of 2,4- and 2,6-toluene diisocyanate, by a wet spinning process with phase inversion coagulation of the polyimide. Hollow fibers obtained by this wet spinning process have a macroporous structure and a circular cross section. Preferred hollow fibers are those prepared the same way or similar as described in example 42 of US 2016/0317981 A1.

The preparation of another suitable hollow fiber is described in WO2014/202324 A1 (US2016144323 (A1). Those polyimide hollow fibers are composed of P84® type 70 or P84® HT of Evonik Industries AG, having improved chemical and physical properties.

Preferably the process according to the invention comprises further a step of thermal treatment, that is conducted after the coating step. The thermal treatment is preferably done at a temperature of from 275 to 450 °C, more preferably of from 300 to 370 °C, most preferably 330 to 370 °C and preferably for a period of time of at least 1 min, more preferably of at least 15 min, even more preferably of from 15 to 180 min., and most preferably of from 30 to 120 min.

The thermal treatment can be conducted in a convective oven, a radiation oven (infrared, microwave), and/or in a continuous or batch manner.

It might be advantageous to conduct an earlier coating step using a siloxane or siloxane solution before the coating step with the solution according to the invention to obtain a gutter layer. The coating may be done using conventional dip-coating technique.

The gutter layer performs the function of providing a smooth and continuous surface for the separation layer. The gutter layer further prevents non-desired pore intrusion of the solution according to the invention into the hollow fiber support. Preferably the gutter layer comprises dialkylsiloxane groups.

Preferably the siloxane or siloxane solution is a curable composition comprising polymerisable dialkylsiloxanes. The polymerisable dialkylsiloxane (which may alternatively be referred to as a polymerisable compound comprising dialkylsiloxane groups) is optionally a monomer having a dialkylsiloxane group or a polymerisable oligomer or polymer having dialkylsiloxane groups. For example, one may prepare the gutter layer from a radiation-curable composition containing a partially crosslinked, radiation-curable polymer comprising dialkylsiloxane groups, as described in more

detail below. Typical dialkylsiloxane groups are of the formula $-\{O-Si(CH_3)_2\}_n-$ wherein n is at least 1, preferably 1 to 100. Poly(dialkylsiloxane) compounds having terminal vinyl groups are also available and these may also be used for preparing the gutter layer by a polymerisation processes.

Preferably siloxanes are free from groups of formula $Si-C_6H_5$. Preferably the curable composition comprises siloxanes comprising two groups of formula $HO_2C-(CH_2)_n-Si-C(OR^1)_2-$ (wherein n and $R^1$ are as hereinbefore defined). Such monomers can act as crosslinking agents for polyepoxy compounds and are commercially available, for example as X-22-162C from Shin-Etsu Chemical Co. Preferably the curable composition is a siloxane solution, comprising the siloxanes and a hydrocarbon as solvent, preferably a hydrocarbon comprising 4 to 10 carbon atoms, more preferably hexane or isohexane.

Irradiation of a curable composition (sometimes referred to as "curing" in this specification) to form the gutter layer may be performed using any source which provides the wavelength and intensity of radiation necessary to cause the radiation-curable composition to polymerize and thereby form the gutter layer on the porous support. For example, electron beam, ultraviolet (UV), visible and/or infrared radiation may be used to irradiate (cure) the radiation-curable composition, with the appropriate radiation being selected to match the components of the composition.

Preferably irradiation of a radiation-curable composition used to form the gutter layer begins within 7 seconds, more preferably within 5 seconds, most preferably within 3 seconds, of the radiation-curable composition being applied to the porous support.

Suitable sources of UV radiation include mercury arc lamps, carbon arc lamps, low pressure mercury lamps, medium pressure mercury lamps, high pressure mercury lamps, swirl-flow plasma arc lamps, metal halide lamps, xenon lamps, tungsten lamps, halogen lamps, lasers and ultraviolet light emitting diodes. Particularly preferred are UV emitting lamps of the medium or high-pressure mercury vapor type. In addition, additives such as metal halides may be present to modify the emission spectrum of the lamp. In most cases lamps with emission maxima between 200 and 450 nm are particularly suitable.

The energy output of the irradiation source is preferably from 20 to 1000 W/cm, preferably from 40 to 500 W/cm but may be higher or lower as long as the desired exposure dose can be realized.

Usually one may apply a radiation-curable composition (siloxane or siloxane solution) to the hollow fiber support, then irradiate the radiation-curable composition to form the gutter layer and then apply the solution according to the invention thereto. Alternatively, one may apply the radiation-curable composition to the hollow fiber support and apply the solution according to the invention (or the chemicals used to prepare the separating layer) on top of the radiation-curable composition and then perform the irradiation step for both layers simultaneously.

With suitable coating techniques, coating speeds of at least 5 m/min, e.g. at least 10 m/min or even higher, such as 15 m/min, 20 m/min, or even up to 100 m/min, can be reached. In a preferred embodiment the composition used to form the gutter layer (and also the compositions used to form the separating layer) is applied to the support at one of the aforementioned coating speeds.

The surface of the gutter layer is preferably activated by corona treatment, plasma treatment (e.g. at or below atmospheric pressure, e.g. in a vacuum), flame treatment and/or ozone treatment. For the corona or plasma treatment generally an energy dose of 0.5 to 100 $kJ/m^2$ will be sufficient, for example about 1, 3, 5, 8, 15, 25, 45, 60, 70 or 90 $kJ/m^2$.

By performing the process according to the invention hollow fiber membranes can be obtained. Preferably the hollow fibers according to the invention, as described below, are produced by the process of the invention.

The hollow fiber membrane of the invention comprises a support hollow fiber comprising polyimide and a separation layer on the outer surface of the hollow fiber cylinder comprising polybenzoxazole. The separation layer preferably has a thickness of from 10 to 5000 nm. The thickness of the separation layer may be determined by cutting through the membrane and examining its cross section by SEM. The part of the separation layer which is present within the pores of the support is not taken into account.

Preferred support hollow fibers are polyimide fibers, having a permeance of more than 500 GPU $N_2$, preferably in the range of 2000 to 20000 GPU $N_2$ and the hollow fiber material has a glass transition temperature Tg > 300°C, preferably Tg > 350 determined according to the method given in the example section.

The hollow fiber membrane of the present invention preferably comprises a silicone comprising layer (gutter layer) between the surface of the support hollow fiber and the separation layer.

The gutter layer performs the function of providing a smooth and continuous surface for the separation layer. Preferably the gutter layer comprises dialkylsiloxane groups.

The gutter layer preferably has an average thickness of from 25 to 1200 nm, more preferably of from 30 to 800 nm, especially of from 50 to 650 nm, e.g. 70 to 120 nm, 130 to 170 nm, 180 to 220 nm, 230 to 270 nm, 300 to 360 nm, 380 to 450 nm, 470 to 540 nm or 560 to 630 nm.

The thickness of the gutter layer may be determined by cutting through the membrane and examining its cross section by SEM. The part of the gutter layer which is present within the pores of the support is not taken into account.

The gutter layer is preferably non-porous, i.e. any pores present therein have an average diameter <1 nm, although it is gas permeable and usually has a low ability to discriminate between gases.

Dialkylsiloxane groups may be incorporated into the gutter layer by using a polymerisable dialkylsiloxane as one of the components of a curable composition used to form the gutter layer. The polymerisable dialkylsiloxane (which may alternatively be referred to as a polymerisable compound comprising dialkylsiloxane groups) is optionally a monomer having a dialkylsiloxane group or a polymerisable oligomer or polymer having dialkylsiloxane groups. For example, one may prepare the gutter layer from a radiation-curable composition containing a partially crosslinked, radiation-curable polymer comprising dialkylsiloxane groups, as described in more detail below. Typical dialkylsiloxane groups are of the formula $-\{O-Si(CH_3)_2\}_n-$ wherein n is at least 1, preferably 1 to 100. Poly(dialkylsiloxane) compounds having terminal vinyl groups are also available and these may be incorporated into the gutter layer by a polymerisation processes.

Preferably the gutter layer is free from groups of formula $Si-C_6H_5$. Preferably the gutter layer comprises groups of formula $-O-CO-(CH_2)_n-Si-C(OR^1)_2-$ wherein n is from 1 to 3 (preferably 2) and $R_1$ is $C_{1-4}$-alkyl (preferably methyl). Such groups may be incorporated into the gutter layer through the use of appropriate monomers, for example monomers comprising two groups of formula $HO_2C-(CH_2)_n-Si-C(OR^1)_2-$ (wherein n and $R^1$ are as hereinbefore defined).

Preferably the gutter layer is present on the support hollow fiber only and does not permeate into the support to any significant extent. However, in another preferred embodiment a portion of the gutter layer is present within the support hollow fiber and a portion of the gutter layer is outside of the support and the following conditions are satisfied:

(i) the portion of the gutter layer outside of the support has an average thickness (GLe) of 10 nm to 900 nm; and
(ii) the portion of the gutter layer present within the support has an average thickness (GLi) of 10% to 350% of GLe.

GLe is preferably 200 to 900 nm, more preferably 400 to 900. Preferably GLi has a value of 10% to 200% of GLe, more preferably 20% to 90% of GLe.

The average thicknesses GLe and GLi may be determined by cutting through the composite membrane, measuring the thicknesses of the gutter layer within and outside of the support at several locations using a scanning electron microscope (SEM) and then calculating the average thicknesses.

The hollow fiber membrane of the invention has preferably a permeance of $CH_4$ of 2 to 40 GPU, more preferably 5 to 30 GPU and a permeance of $CO_2$ of 120 to 1200 GPU, more preferably 150 to 500 GPU and a pure gas selectivity $CO_2/CH_4$ of from 30 to 60, more preferably 17 to 30, determined according to the method given in the description later on in the example section.

Preferred hollow fiber membrane according to the invention are obtained by a process according to the invention.

The hollow fiber membranes according to the invention can be used for fluid separation, preferably organic solvent nanofiltration or gas separation, preferably for the separation of $O_2$ and $N_2$ or $CH_4$ and $CO_2$, more preferably $CH_4$ and $CO_2$. Therefore, a further aspect of the present invention is a process or method for gas separation, wherein the hollow fiber membrane of the invention is used, wherein preferably $O_2$ is separated from $N_2$ or $CH_4$ is separated from $CO_2$.

Even without further elaboration it is believed that a person skilled in the art will be able to make the widest use of the above description. The preferred embodiments and examples are therefore to be interpreted merely as a descriptive disclosure which is by no means limiting in any way whatsoever.

The subject matter of the present invention is described in more detail in the figures, without any intention that the subject matter of the present invention be restricted to these figures.

Fig. 1 shows the FTIR spectra made from the polymer obtained in example 1 (upper spectrum) as well as from the thermal treated polymer lower spectrum. It can be seen, that the upper spectrum shows a significant peak at a wavelength of 1600 $cm^{-1}$ which is characteristic for the C=O group of amide and imides groups. In the lower spectrum those peaks are not visible which evidences, that the polyhydroxyamide has thermal rearranged to polybenzoxazole.

Fig. 2a shows a SEM picture of a part of the cross-section of an uncoated hollow fiber as used as raw material in example 7 embedded in a matrix material.

Fig. 2b shows a SEM picture of the cross-section of two uncoated hollow fiber as used as raw material in example 7 embedded in a matrix material.

Fig. 2c shows a SEM picture of a part of the cross-section of two coated hollow fibers as obtained in example 8 embedded in a matrix material.

Fig. 2d shows a SEM picture of the cross-section of a coated hollow fiber as obtained in example 8 embedded in a matrix material.

The subject matter of the present invention is elucidated in detail in the following examples, without any intention that the subject matter of the present invention be restricted to these.

**Examples:**

**Test methods:**

**a) FTIR spectrum:**

FT-IR spectra are measured with a Bruker Tensor 27 Sample Compartment RT-DLaTGS by using applying the sample on an ATR unit. Background and sample are measured with 16 scans in the range from 800 to 4000 $cm^{-1}$.

**b) FESEM/EDX:**

FESEM measurement are performed with a Zeiss Sigma 300 and a Zeiss Ultra 55 (5 kV accelerating voltage). Pictures are recorded by measurement of secondary electrons (Everhart-Thornley detector/ Inlens detector) or back scattered electrons (HDAsB detector). EDX measurements were performed with an accelerating voltage of 5 kV.

**c) Determination of permeance:**

Gas permeabilities are recorded for hollow fibers or flat sheet membranes in GPUs (Gas Permeation Units, $10^{-6}$ $cm^3 \cdot cm^{-2} \cdot s^{-1} \cdot cmHg^{-1}$).

To measure the permeance of hollow fibers, the flow (at standard temperature and pressure; STP) of the permeate side is measured at constant pressure (atmospheric). Permeance is computed using the following formula:

$$p = \frac{Q}{A.\Delta p}.10^{6}$$

p permeance in GPU (gas permeation units. 10-6 $cm^3$ (STP)$cm^{-2}.s^{-1}.cmHg^{-1}$)
Q flow of permeate side in $cm^3$ (STP)/s
A outside surface area of hollow fiber in $cm^2$
$\Delta$ p pressure difference between feed and permeate side in cm Hg.

The selectivities of various gas pairs are pure-gas selectivities. The selectivity between two gases computes from the ratio of permeabilities:

$$S = P_1/P_2$$

S ideal gas selectivity
$P_1$ is the permeance of gas 1
$P_2$ is the permeance of gas 2

**d) Determination of viscosity:**

The viscosity was determined in accordance with DIN EN ISO 3219 in Pa.s using a rotational viscometer at the temperature specified in each case.

**e) Determination of glass transition temperature Tg:**

The thermal properties of the polyesters used in the context of the present invention are determined by differential scanning calorimetry (DSC) in accordance with the DSC method DIN 53765. The values of the second heating interval are stated and the heating rate was 10 K/min.

**f) Determination of molecular weight Mw and Mn:**

The weight average molecular weight (Mw) and the number-average molecular weight (Mn) of the polyimide according to the invention is determined in accordance with DIN 55672-1 by means of gel permeation chromatography in

DMF as eluent and polystyrene for calibration.

Components and settings used were as follows:

| | |
|---|---|
| HPLC | WATERS 2690/5 (pump), 2489 UV-Detector |
| precolumn | PSS SDV precolumn |
| column | PSS SDV 10µm 1000, 105 und 106 Å |
| eluent | 0.01 M LiBr + 0.03M $H_3PO_4$ in DMF (filtered with 0.45µm) |
| flow | 1.0 ml/min |
| Running time | 43 min |
| pressure | ~1100 psi |
| Detection wave length | 270 nm |
| injection volumes | 50 µl or 20 µl (for solutions c >1g/l) |
| standards | PS(Polystyrol)-Standards (narrow distributed, 600-3x106, PSS). |

**g) Determination of polydispersity (PDI):**

The polydispersity PDI of a polymer is the quotient formed by dividing the number average Mn into the mass average Mw, which are obtained from the molar mass determination. The molar masses are relative molar masses based on polystyrene standards.

**h) Determination of tensile strength, elongation and tensile modulus:**

The measurements were performed on a Zwick Universalprüfmaschine Z050 using a tensile test equipment and a 100 N load cell.

| | | |
|---|---|---|
| Clamping length | 200 | mm |
| Preload | 0,1 | N |
| Test speed preload | 20 | mm/min |
| Force to zero after preload | | |
| Speed E-Modul | 20 | mm/min |
| Test speed | 50 | mm/min |
| Load cut-out threshold | 80 | % Fmax |
| Load cut-out threshold for break test | 0,5 | N |
| Upper force limit | 90 | N |
| Maximum change in length | 400 | mm |

**Modulus of elasticity (E-Modul):**

| | | |
|---|---|---|
| Methode of measurement | secant | |
| Start of strain | 0,05 | % |
| End of strain | 0,25 | % |

**Break:**

| | | |
|---|---|---|
| Number of measurements | 10 | |
| Force step | 5 | % |
| Negative step-like change in strain | 10 | % |
| Positive step-like change in strain | 10 | % |

**Raw materials:**

| | | |
|---|---|---|
| 4,4'-(hexafluoroisopropylidene)bis(2-aminophenol) | [bisAPAF] | Changzhou Sunlight Pharmaceutical Co., Ltd |
| Chlorotrimethylsilane | [TMSCl] | Sigma Aldrich/Tokyo Chemical Industry Co., Ltd. |
| N-methyl-2-pyrrolidone | [NMP] | Sigma Aldrich |
| N-ethyl-2-pyrrolidone | [NEP] | Sigma Aldrich |
| Pyridine | | Sigma Aldrich |
| Isophthalic acid chloride | | Sigma Aldrich |
| Terephthalic acid chloride | | Sigma Aldrich |
| Benzophenone-3,3',4,4'-tetracarboxylic dianhydride | | Jayhawk Fine Chemicals |
| Xylol | | Sigma Aldrich |
| Ethanol | | Lenzing AG |
| N,N-dimethylformamide | [DMF] | BASF |
| Tetrahydrofuran | [THF] | Sigma Aldrich |
| Methylethylketone | [MEK] | Sigma Aldrich |

**Example 1 Production of IPCl-bisAPAF as polyhydroxyamide:**

A 1000 ml flask was dried in a N2 stream. 36.63 g (0.1 mol) 4,4'-(hexafluoroisopropylidene)bis(2-aminophenol) [bisAPAF] and 300 g dry N-methyl-2-pyrrolidone [NMP] were filled into the flask and the solution was cooled down to 10 °C using a cooling bath. Then 44.5 g (0.41mol) chlorotrimethylsilane (TMSCl) were added dropwise via a syringe. 10 min. after the complete addition of TMSCl 35.7 g (0.451 mol) pyridine were added. The reaction mixture was heated to room temperature and stirred in an $N_2$ stream for 120 minutes. Then the solution was cooled down to 10 °C using a cooling bath and 20.30 g (0.1 mol) isophthalic acid chloride were added as solid and rinsed with 100 g NMP. After 30 min. 17.4 g (0.22 mol) pyridine were added. The reaction mixture was cooled for another 60 min and afterwards stirred over night at room temperature.

The viscous reaction mixture was precipitated in water and the resulting polymer granules were washed with water and afterwards dried at 80 °C with circulating air.

The following molecular weights were measured: Mn = 55191 $g \cdot mol^{-1}$, Mw = 249961 $g \cdot mol^{-1}$; PDI = 4.53

**Example 2 Production of TPCl-bisAPAF as polyhydroxyamide:**

A 1000 ml flask was dried in a N2 stream. 36.63 g (0.1 mol) 4,4'-(hexafluoroisopropylidene)bis(2-aminophenol) [bisAPAF] and 300 g dry NMP were filled into the flask and the solution was cooled down to 10 °C using a cooling bath. Then 44.5 g (0.41mol) chlorotrimethylsilane (TMSCl) were added dropwise via a syringe. 10 min. after the complete addition of TMSCl, 35.7 g (0.451 mol) pyridine were added. The reaction mixture was heated to room temperature and stirred in an N2 stream for 120 minutes. Then 20.30 g (0.1 mol) terephthalic acid chloride were added as solid and rinsed with 100 g NMP. After 30 min. 17.4 g (0.22 mol) pyridine were added. The reaction mixture was cooled for another 60 min and afterwards stirred over night at room temperature.

The viscous reaction mixture was precipitated in water and the resulting polymer granules were washed with water and afterwards dried at 80 °C with circulating air.

The following molecular weights were measured: Mn = 88932 $g \cdot mol^{-1}$, Mw = 519372 $g \cdot mol^{-1}$; PDI = 5.84

**Comparative example 1 (Polyhydroxyimide PHI imidized via azeotropic distillation):**

A 1000 ml flask was dried in a N2 stream. 36.63 g (0.1 mol) 4,4'-(hexafluoroisopropylidene)bis(2-aminophenol) [bisAPAF] and 218 g NMP were filled into the flask. The mixuture was stirred until the diamine was completely dissolved. Then 32.22 g (0.1 mol) Benzophenone-3,3',4,4'-tetracarboxylic dianhydride [BTDA] were in 4 steps in an amount, that the temperature in the reaction mixture did not exceed 40 °C. A clear yellowish solution was obtained, that was stirred at room temperature overnight.

Then 145 g Xylol were added slowly to the solution. The flask was equipped with water separator and cooler. The solution was heated to boiling temperature under a slight N2 stream and vigorous stirring. The heating under reflux was

continued to the time, when no longer water was obtained in the water separator. Then the reaction was allowed to continue for another hour and afterwards the reaction mixture was cooled down to room temperature.

The viscous reaction mixture was precipitated in 2000 ml ethanol and the resulting polymer granules were washed with water and afterwards dried at 80 °C with circulating air.

The following molecular weights were measured: Mn = 90157 $g \cdot mol^{-1}$, Mw = 159184 $g \cdot mol^{-1}$; PDI = 1.77.

**Example 3 Screening of the solubility:**

Different amounts of the polymers obtained in example 1 and 2 and comparative example 1 were dissolved in a different amount in isopropanol and other solvents. The results are shown in table 1.

Table 1a: Parameters and results of the solubility test (amount given in % by weight)

| Polymer/Solvent | Amount [wt%] | I Ethanol | 1-propanol | 2-propanol | Isopropanol/DMF (1:1 by weight) | NMP/NEP |
|---|---|---|---|---|---|---|
| Example 1 | 5 | partially soluble to soluble | partially soluble to soluble* | partially soluble to soluble* | partially soluble to soluble* | soluble |
| Example 2 | 3 | partially soluble to soluble | partially soluble | partially soluble | partially soluble to insoluble | soluble |
| Comparative example | 5 | insoluble | insoluble | insoluble | partially soluble | soluble |
| *Solution is cloudy at the beginning and has to be filtered. Insoluble particles are most likely caused by high molecular weight polymer fraction. | | | | | | |

Table 1b: Parameters and results of the solubility test (amount given in % by weight)

| Polymer/Solvent | Amount [wt%] | 1,3-Dioxolane | MEK | Ethyl-acetate | THF |
|---|---|---|---|---|---|
| Example 1 | 5 | partially soluble | insoluble | insoluble | soluble* |
| Example 2 | 3 | insoluble | insoluble | insoluble | Insoluble |
| Comparative example | 5 | | | | partially soluble |
| *Solution is cloudy at the beginning and has to be filtered. Insoluble particles are most likely caused by high molecular weight polymer fraction. | | | | | |

It can be seen from the results, given in table 1a and 1b, that the PHA of examples 1 and 2 show a sufficient solubility in isopropanol. It can be seen, that the solubility in isopropanol is decreasing with increasing molecular weight.

**Example 4 Thermal treatment of IPCI-bisAPAF as polyhydroxyamide:**

The polymer granules obtained in in example 1 was treated thermally at a temperature of 350 °C for about 60 minutes.

FTIR spectra were made from the polymer obtained in example 1 as well as from the thermal treated polymer. Fig. 1 show those FTIR-spectra. The upper spectrum is that of the polymer of example 1, while the lower spectrum given in Fig 1 is that of the thermal treated polymer. It can be seen, that the upper spectrum in Fig. 1 shows a significant peak at a wavelength of 1600 $cm^{-1}$ which is characteristic for the C=O group of amide and imides groups. In the lower spectrum shown in Fig. 1 those peaks are not visible which evidences, that the polyhydroxyamide has thermal rearranged to polybenzoxazole.

**Example 5 Preparation of a coating solutions:**

A) 2 g of the product obtained in example 1 was solved under vigorous stirring in 98 g isopropanol. The solution was

filtered before use with a 3 μm paper filter.

B) 1 g of the product obtained in example 1 was solved under vigorous stirring in 99 g isopropanol. The solution was filtered before use with a 3 μm paper filter.

**Example 6 Preparation of hollow fiber substrate:**

A polyimide solution in DMF was prepared as described in Example 13 of US10040036B2. The solution was devolatilized and filtered at 50°C and gear pumped through a binary nozzle. The flow rate of the polymer solution was 337 g/h. While the polymer solution was conveyed in the exterior region of the binary nozzle, a mixture (bore solution) of 60% dimethylformamide and 40% water was conveyed on the inside in order to manufacture the hole in the hollow fibers. The flow rate of the bore solution was 110 ml/h. At a distance of 13 cm away from the nozzle, the hollow fiber entered warm water at 70° C. On the path between the nozzle and the coagulation bath, the hollow fiber was enveloped with a tube. A nitrogen stream of 0.6 l/min flowed through this tube after being preheated to 50° C. The fiber after the coagulation bath was pulled through a warm water wash bath at 70° C and finally wound up at a speed of 40 m/min. Following an extraction with water for 6 hours, the hollow fibers were dipped into isopropanol. Following the exchange of solvents, the membranes were led at 70° C through a drying sector and dried in about 40 seconds. During drying, the fiber was pulled once through a 0.3 wt % Sylgard™ 184 (The Dow Chemical Company) in isohexane solution at a speed of 40 m/min using a dip coating tank having a volume of 10 liter and thereafter further dried. The membranes obtained contain about 2 wt % of residual water, ≤0.5 wt % of residual solvent (isopropanol, isohexane) and <0.1 wt % of residual DMF, determined by evaporation and GC.

**Example 7 Preparation of coated hollow fibers:**

The coating of the hollow fibers is done via dip coating using the coating solution of example 5 B). The dip coating was done manually by immersing the fiber slowly into a glass tube filled with the coating solution and manually pulling out the fiber after resting in the coating solution for about 4 seconds. As hollow fibers were polyimide hollow fibers used as described in example 6.

**Example 8 Thermal treatment of coated hollow fibers:**

Some of the coated hollow fibers obtained in example 7 were heat treated under $N_2$ atmosphere that contained less than 0.001% $O_2$. The temperature was raised at a rate of 5°C/min to 100°C and then dwelled for 40 min. Subsequently it was increased to 250 °C by 5 °C/min and allowed to dwell for 60 min. Eventually the temperature was raised at a rate of 2°C/min to the final temperature of 350°C. After dwelling for 60 min, the oven cooled down naturally.

SEM/EDX scans were made from the cross-section of an uncoated hollow fiber as used as raw material in example 7 (Fig. 2a and 2b) and of a hollow fiber obtained in example 8 (Fig. 2c and 2d). It can be seen from Fig. 2c and Fig. 2d that this hollow fiber is coated with a second polymer. An EDX scan showed that this second polymer coating comprises fluorine atoms and therefore is composed of PBO obtained from the fluorine containing IPCl-bisAPAF. An EDX scan for fluorine of the uncoated hollow fiber did not show any fluorine at all.

The SEM/EDX scans therefore evidence, that the hollow fiber was successfully coated with a PBO polymer film.

**Example 9 Testing of the gas permeation of different hollow fibers:**

The gas permeation characteristics of the hollow fibers obtained in examples 7 and 8 and of an uncoated polyimide hollow fiber as described in example 6 were determined using the method given above. The single gas permeation was determined for oxygen, nitrogen, helium, carbon monoxide and methane using pure gas at 5 $bar_g$ and room temperature. The selectivity was calculated by ratio of permeance (single gas). The results are given in table 2.

Table 2: results of the gas permeation tests

| Hollow Fiber | Permeance | | | | | Selectivity | | |
|---|---|---|---|---|---|---|---|---|
| | He | $O_2$ | $N_2$ | $CO_2$ | $CH_4$ | He/$N_2$ | $O_2$/$N_2$ | $CO_2$/$CH_4$ |
| | [GPU] | | | | | [-] | | |
| Example 6 | 8234.7 | 4030.5 | 4324.9 | 3452.0 | - | 1.9 | 0.9 | - |
| Example 7 | 104.0 | 5.1 | 1.3 | 49.4 | - | 81.0 | 4.0 | - |
| Example 8 | 261.3 | 31.3 | 5.2 | 158.9 | 3.9 | 50.2 | 6.0 | 41.1 |

It can be seen from the results given in table 2, that the hollow fiber prepared according to example 6 shows high permeances but almost none selectivity. The permeances of the hollow fiber according to example 7 are much lower than those of example 6 but the selectivity is much higher. The selectivity of the hollow fiber of example 8 is depending on the gas mixture higher or lower than the selectivity of the hollow fiber according to example 7. However, the permeance for all pure gases is much higher for the hollow fiber according to example 8 than for the hollow fiber according to example 7.

**Example 10 Examination of the mechanical properties:**

Tensile strength and elongation at break were determined for the hollow fibers of examples 7 and 8. It was found, that the mechanical properties are almost the same for both hollow fibers. The tensile strength was about 1.5 N and the elongation at break about 15 % for both hollow fibers. Therefore, neither the coating nor the thermal treatment had a negative impact on the mechanical properties of the hollow fibers.

## Claims

1. Solution comprising 0.05 to 7.5 parts by weight of a polyhydroxyamide and from 99.95 to 92.55 parts by weight of one or more alcohols, **characterized in that** the of one or more alcohols are selected from isopropanol, n-propanol, and ethanol, wherein the polyhydroxyamide has a number average molecular weight $M_n$, determined according to the method given in the description, of from 10000 to 120000 g/mol, preferably 35000 to 70000 g/mol, and a polydispersity index according to the method given in the description, of 2 to 9, preferably 3 to 7.

2. Solution according to claim 1, **characterized in that** the polyhydroxyamide is of formula (I)

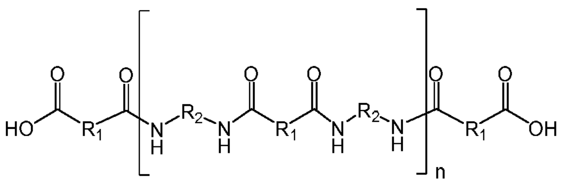

(I)

with n from 10 to 10000, $R_2$ a hydrocarbon radical comprising at least two hydroxyl-groups, and optionally one or more halogen-radicals, more preferably fluorine-radicals, and $R_1$ a hydrocarbon radical, more preferably a hydrocarbon radical comprising of from 2 to 12, most preferably from 4 to 8 carbon atoms.

3. Solution according to claim 1 or 2, wherein the polyhydroxyamide is of formula (II)

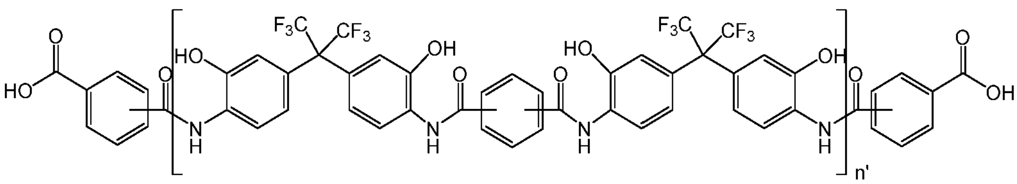

(II)

with n from 10 to 5000

4. Solution according to claim 3, wherein the polyhydoxyamide is of formula (IIa) or (IIb), more preferably of formula (Ia)

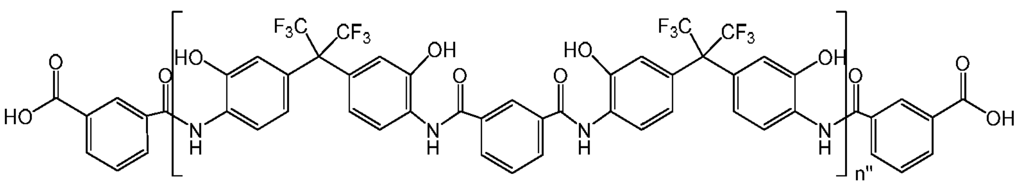

(IIa)

with n from 10 to 1000

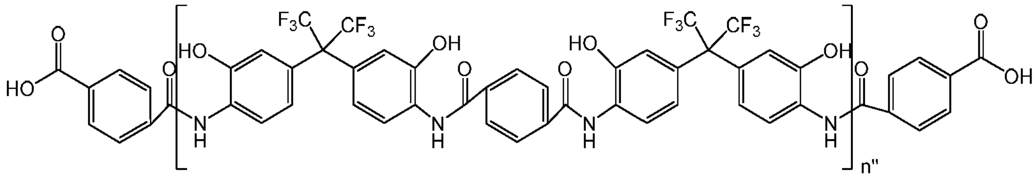

(IIb)

with n from 10 to 1000.

5. Process for preparing a hollow fiber membrane, **characterized in that** it comprises the step of coating a hollow fiber on the outside with a solution according to one of claims 1 to 4.

6. Process according to claim 5, **characterized in that**, it comprises a further step of thermal treatment, conducted after the coating step.

7. Process according to claim 6, **characterized in that** the thermal treatment is done at a temperature of from 275 to 450 °C, more preferably of from 300 to 370 °C, most preferably 330 to 370 °C and for a period of time of at least 1 min, more preferably of at least 15 min, even more preferably of from 15 to 180 min., and most preferably of from 30 to 120 min.

8. Process according to claims 5 to 7, **characterized in that** before the coating step an earlier coating step using a siloxane or siloxane solution before the coating step with the solution according to one of claims 1 to 4 to obtain a gutter layer.

9. Process according to any of claims 5 to 8, **characterized in that** the hollow fiber used is a polyimide fiber, having a permeance 500 GPU $N_2$, preferably in the range of 2000 to 20000 GPU $N_2$ and the hollow fiber material has a glass transition temperature Tg > 300 °C, preferably Tg > 350 °C determined according to the method given in the description.

10. Hollow fiber membrane **characterized in that** it comprises a support hollow fiber comprising polyimide and a separation layer on the outer surface of the hollow fiber cylinder comprising polybenzoxazole.

11. Hollow fiber membrane according to claim 10, **characterized in that** the separation layer has a thickness of from 20 to 10000 nm, more preferably of from 100 to 3000 nm.

12. Hollow fiber membrane according to claim 10 or 11, **characterized in that** the support hollow fiber has a permeance 500 GPU $N_2$, preferably in the range of 2000 to 20000 GPU $N_2$ and the hollow fiber material has a glass transition temperature Tg > 300 °C, preferably Tg > 350 °C determined according to the method given in the description.

13. Hollow fiber membrane according to any one of claims 10 to 12, characterized that is has a permeance of $CH_4$ of 2 to 40 GPU, more preferably 5 to 30 GPU and a permeance of $CO_2$ of 120 to 1200 GPU, more preferably 150 to 500 GPU and a pure gas selectivity $CO_2/CH_4$ of from 30 to 50, more preferably 35 to 45, determined according to the method given in the description.

14. Hollow fiber membrane according to any of claims 10 to 13, **characterized in that** it comprises a silicone comprising gutter layer between the surface of the support hollow fiber and the separation layer, preferably having an average thickness of 10 nm to 900 nm.

15. Hollow fiber membrane according to claim 14, **characterized in that** a portion of the gutter layer is present within the support hollow fiber and a portion of the gutter layer is outside of the support and the following conditions are satisfied:

(i) the portion of the gutter layer outside of the support has an average thickness (GLe) of 10 nm to 900 nm; and
(ii) the portion of the gutter layer present within the support has an average thickness (GLi) of 10% to 350% of GLe.

16. Hollow fiber membrane according to any of claims 10 to 15, **characterized in that** it is obtained by a process according

to any one of claims 5 to 9.

**17.** Use of a hollow fiber membrane for fluid separation, preferably organic solvent nanofiltration or gas separation, more preferably for the separation of $O_2$ and $N_2$ or $CH_4$ from $CO_2$, more preferably $CH_4$ from $CO_2$., **characterized by** a hollow fiber membrane according to any one of claims 10 to 16.

**18.** Process for preparing a solution with the following steps:

a) Providing at least one alcohol;
b) Providing a polyhydroxyamide having a number average molecular weight $M_n$, determined according to the method given in the description, said average molecular weight $M_n$ ranging from 10000 to 120000 g/mol or from 35000 to 70000 g/mol, wherein said polyhydroxyamide having a polydispersity index of 2 to 9 or of 3 to 7;
c) Dissolving said polyhydroxyamide in said alcohol, **characterized by** the solution according to at least one of the claims 1 to 4, and wherein said at least one alcohol of step a) is selected from the group consisting of isopropanol, n-propanol and ethanol.

**19.** Process according to claim 18, further comprising the step:
d) Filtering obtained solution.

**20.** Process according to claim 18 or 19, **characterized in that** dissolving is performed under stirring.

**Patentansprüche**

**1.** Lösung umfassend 0,05 bis 7,5 Gewichtsteile an einem Polyhydroxyamid und 99,95 bis 92,55 Gewichtsteile an einem oder mehreren Alkoholen, **dadurch gekennzeichnet, dass** der eine oder die mehreren Alkohole ausgewählt sind aus Isopropanol, n-Propanol und Ethanol, wobei das Polyhydroxyamid ein anzahlgemitteltes Molekulargewicht $M_n$, bestimmt nach dem in der Beschreibung gegebenen Verfahren, von 10000 bis 120000 g/mol, vorzugsweise 35000 bis 70000 g/mol, und einen Polydispersitätsindex nach dem in der Beschreibung gegebenen Verfahren von 2 bis 9, vorzugsweise 3 bis 7, aufweist.

**2.** Lösung nach Anspruch 1, **dadurch gekennzeichnet, dass** das Polyhydroxyamid gemäß Formel (I) gebildet ist,

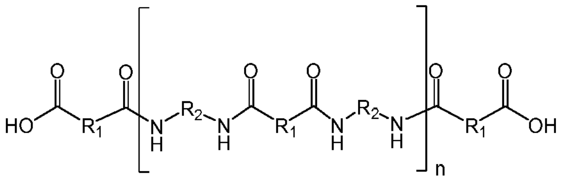

(I)

wobei n von 10 bis 10000 beträgt, $R_2$ ein Kohlenwasserstoffrest umfassend wenigstens zwei Hydroxygruppen und gegebenenfalls einen oder mehrere Halogenreste, bevorzugter Fluorreste, ist und $R_1$ ein Kohlenwasserstoffrest, bevorzugter ein Kohlenwasserstoffrest umfassend von 2 bis 12, höchst bevorzugt von 4 bis 8, Kohlenstoffatome ist.

**3.** Lösung nach Anspruch 1 oder 2, wobei das Polyhydroxyamid gemäß Formel (II) gebildet ist,

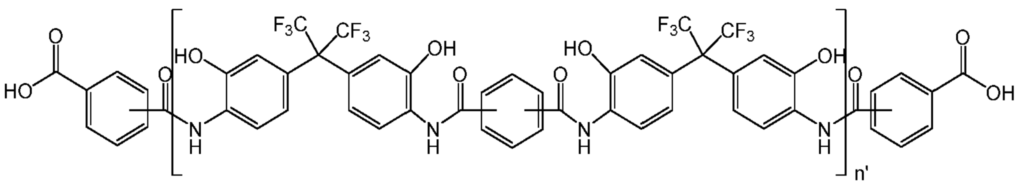

(II)

wobei n von 10 bis 5000 beträgt.

**4.** Lösung nach Anspruch 3, wobei das Polyhydroxyamid gemäß Formel (IIa) oder (IIb), bevorzugter gemäß Formel (Ia),

gebildet ist,

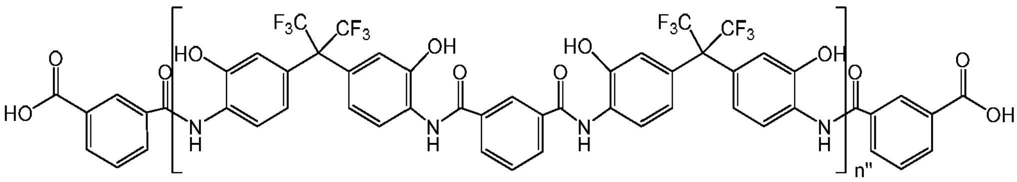

(IIa)

wobei n von 10 bis 1000 beträgt,

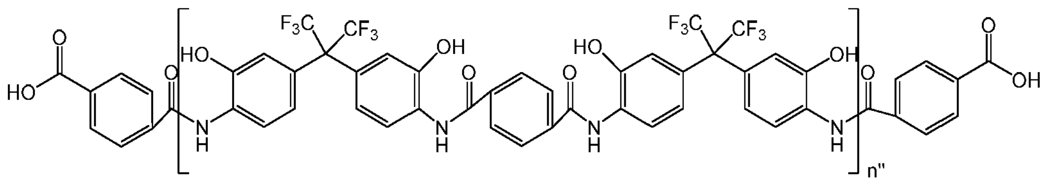

(IIb)

wobei n von 10 bis 1000 beträgt.

5. Verfahren zur Herstellung einer Hohlfasermembran, **dadurch gekennzeichnet, dass** es den Schritt des Beschichtens einer Hohlfaser an der Außenseite mit einer Lösung nach einem der Ansprüche 1 bis 4 umfasst.

6. Verfahren nach Anspruch 5, **dadurch gekennzeichnet, dass** es einen weiteren Schritt von Wärmebehandlung, durchgeführt nach dem Beschichtungsschritt, umfasst.

7. Verfahren nach Anspruch 6, **dadurch gekennzeichnet, dass** die Wärmebehandlung bei einer Temperatur von 275 bis 450 °C, bevorzugter von 300 bis 370 °C, höchst bevorzugt von 330 bis 370 °C, und für einen Zeitraum von wenigstens 1 min, bevorzugter von wenigstens 15 min, noch bevorzugter von 15 bis 180 min und höchst bevorzugt von 30 bis 120 min durchgeführt wird.

8. Verfahren nach Ansprüchen 5 bis 7, **dadurch gekennzeichnet, dass** vor dem Beschichtungsschritt ein früherer Beschichtungsschritt unter Verwendung eines Siloxans oder einer Siloxanlösung vor dem Beschichtungsschritt mit der Lösung nach einem der Ansprüche 1 bis 4 durchgeführt wird, um eine Abflussschicht zu erhalten.

9. Verfahren nach einem der Ansprüche 5 bis 8, **dadurch gekennzeichnet, dass** die verwendete Hohlfaser eine Polyimidfaser mit einer Permeanz von 500 GPU $N_2$, vorzugsweise in dem Bereich von 2000 bis 20000 GPU $N_2$, ist und das Hohlfasermaterial eine Glasübergangstemperatur Tg > 300 °C, vorzugsweise Tg > 350 °C, bestimmt nach dem in der Beschreibung gegebenen Verfahren, aufweist.

10. Hohlfasermembran, **dadurch gekennzeichnet, dass** sie eine Trägerhohlfaser, die Polyimid umfasst, und eine Trennschicht auf der Außenfläche des Hohlfaserzylinders, die Polybenzoxazol umfasst, umfasst.

11. Hohlfasermembran nach Anspruch 10, **dadurch gekennzeichnet, dass** die Trennschicht eine Dicke von 20 bis 10000 nm, bevorzugter von 100 bis 3000 nm, aufweist.

12. Hohlfasermembran nach Anspruch 10 oder 11, **dadurch gekennzeichnet, dass** die Trägerhohlfaser eine Permeanz von 500 GPU $N_2$, vorzugsweise in dem Bereich von 2000 bis 20000 GPU $N_2$, aufweist und das Hohlfasermaterial eine Glasübergangstemperatur Tg > 300 °C, vorzugsweise Tg > 350 °C, bestimmt nach dem in der Beschreibung gegebenen Verfahren, aufweist.

13. Hohlfasermembran nach einem der Ansprüche 10 bis 12, **dadurch gekennzeichnet, dass** sie eine Permeanz von $CH_4$ von 2 bis 40 GPU, bevorzugter 5 bis 30 GPU, und eine Permeanz von $CO_2$ von 120 bis 1200 GPU, bevorzugter 150 bis 500 GPU, und eine Reingasselektivität $CO_2/CH_4$ von 30 bis 50, bevorzugter 35 bis 45, bestimmt nach dem in

der Beschreibung gegebenen Verfahren, aufweist.

**14.** Hohlfasermembran nach einem der Ansprüche 10 bis 13, **dadurch gekennzeichnet, dass** sie zwischen der Oberfläche der Trägerhohlfaser und der Trennschicht eine Silicon umfassende Abflussschicht umfasst, vorzugsweise mit einer mittleren Dicke von 10 nm bis 900 nm.

**15.** Hohlfasermembran nach Anspruch 14, **dadurch gekennzeichnet, dass** ein Teil der Abflussschicht innerhalb der Trägerhohlfaser vorhanden ist und ein Teil der Abflussschicht außerhalb des Trägers liegt und folgende Bedingungen erfüllt sind:

(i) der Teil der Abflussschicht außerhalb des Trägers weist eine mittlere Dicke (GLe) von 10 nm bis 900 nm auf; und
(ii) der innerhalb des Trägers vorhandene Teil der Abflussschicht weist eine mittlere Dicke (GLi) von 10 % bis 350 % GLE auf.

**16.** Hohlfasermembran nach einem der Ansprüche 10 bis 15, **dadurch gekennzeichnet, dass** sie durch ein Verfahren nach einem der Ansprüche 5 bis 9 erhalten ist.

**17.** Verwendung einer Hohlfasermembran zur Fluidtrennung, vorzugsweise organischen Lösungsmittel-Nanofiltration oder Gastrennung, bevorzugter zur Trennung von $O_2$ und $N_2$ oder $CH_4$ von $CO_2$, bevorzugter $CH_4$ von $CO_2$, **gekennzeichnet durch** eine Hohlfasermembran nach einem der Ansprüche 10 bis 16.

**18.** Verfahren zur Herstellung einer Lösung mit den folgenden Schritten:

a) Bereitstellen wenigstens eines Alkohols;
b) Bereitstellen eines Polyhydroxyamids mit einem anzahlgemittelten Molekulargewicht $M_n$, bestimmt nach dem in der Beschreibung gegebenen Verfahren, wobei das mittlere Molekulargewicht $M_n$ im Bereich von 10000 bis 120000 g/mol oder von 35000 bis 70000 g/mol liegt, wobei das Polyhydroxyamid einen Polydispersitätsindex von 2 bis 9 oder von 3 bis 7 aufweist;
c) Lösen des Polyhydroxyamids in dem Alkohol, **gekennzeichnet durch** die Lösung nach wenigstens einem der Ansprüche 1 bis 4, und wobei der wenigstens eine Alkohol von Schritt a) ausgewählt ist aus der Gruppe bestehend aus Isopropanol, n-Propanol und Ethanol.

**19.** Verfahren nach Anspruch 18, ferner umfassend den Schritt:
d) Filtrieren der erhaltenen Lösung.

**20.** Verfahren nach Anspruch 18 oder 19, **dadurch gekennzeichnet, dass** Lösen unter Rühren durchgeführt wird.

## Revendications

**1.** Solution comprenant de 0,05 à 7,5 parties en poids d'un polyhydroxyamide et de 99,95 à 92,55 parties en poids d'un ou plusieurs alcools, **caractérisée en ce que** le ou les alcools sont choisis parmi l'isopropanol, le n-propanol et l'éthanol, le polyhydroxyamide ayant un poids moléculaire moyen en nombre $M_n$, déterminé selon le procédé indiqué dans la description, allant de 10 000 à 120 000 g/mole, de préférence de 35 000 à 70 000 g/mole, et un indice de polydispersité selon le procédé donné dans la description, de 2 à 9, de préférence 3 à 7.

**2.** Solution selon la revendication 1, **caractérisée en ce que** le polyhydroxyamide de formule (I) est formé,

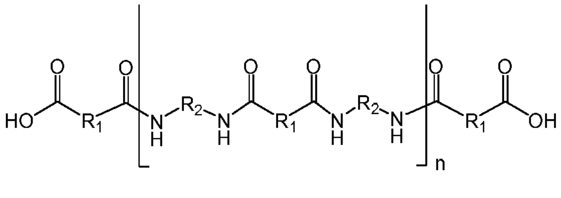

(I)

avec n de 10 à 10 000, $R_2$ est un radical hydrocarboné comprenant au moins deux groupes hydroxyle, et éventuellement un ou plusieurs radicaux halogène, plus préférablement des radicaux fluor, et $R_1$ est un radical

hydrocarboné, plus préférablement un radical hydrocarboné comprenant de 2 à 12, le plus préférablement de 4 à 8 atomes de carbone.

**3.** Solution selon la revendication 1 ou 2, dans laquelle le polyhydroxyamide de formule (II) est formé,

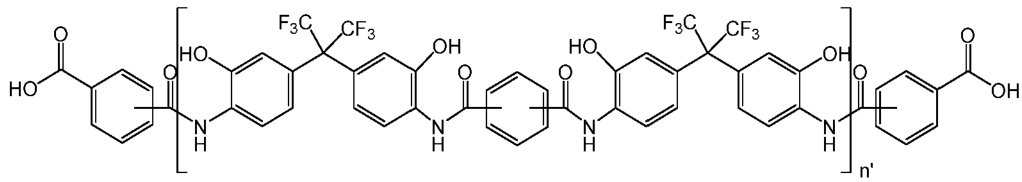

(II)

avec n de 10 à 5 000.

**4.** Solution selon la revendication 3, dans laquelle le polyhydroxyamide de formule (IIa) ou (IIb), plus préférablement de formule (Ia), est formé,

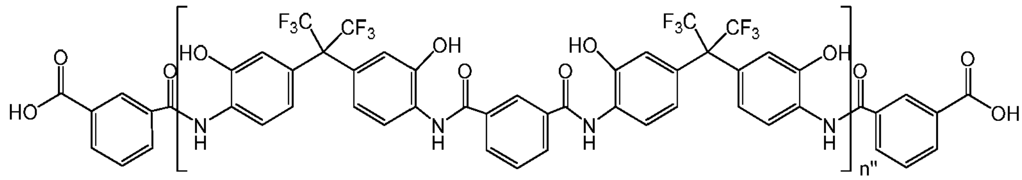

(IIa)

avec n de 10 à 1 000

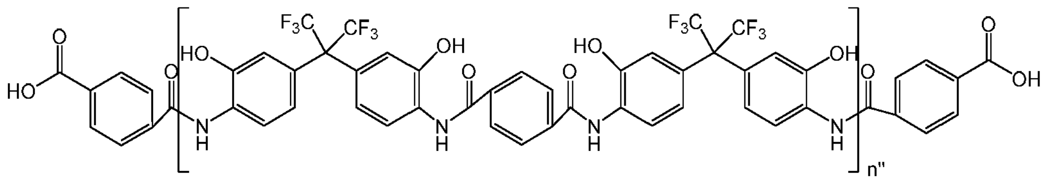

(IIb)

avec n de 10 à 1 000.

**5.** Procédé de préparation d'une membrane à fibres creuses, **caractérisé en ce qu'**il comprend l'étape de revêtement d'une fibre creuse sur l'extérieur avec une solution selon l'une des revendications 1 à 4.

**6.** Procédé selon la revendication 5, **caractérisé en ce qu'**il comprend une étape supplémentaire de traitement thermique, effectuée après l'étape de revêtement.

**7.** Procédé selon la revendication 6, **caractérisé en ce que** le traitement thermique est effectué à une température de 275 à 450 °C, plus préférablement de 300 à 370 °C, le plus préférablement de 330 à 370 °C et pendant une période de temps d'au moins 1 min, plus préférablement d'au moins 15 min, encore plus préférablement de 15 à 180 min et le plus préférablement de 30 à 120 min.

**8.** Procédé selon les revendications 5 à 7, **caractérisé en ce que**, avant l'étape de revêtement, une étape de revêtement antérieure utilisant un siloxane ou une solution de siloxane avant l'étape de revêtement avec la solution selon l'une des revendications 1 à 4 pour obtenir une couche de gouttière.

**9.** Procédé selon l'une quelconque des revendications 5 à 8, **caractérisé en ce que** la fibre creuse utilisée est une fibre de polyimide ayant une perméance de 500 GPU $N_2$, de préférence dans la plage de 2 000 à 20 000 GPU $N_2$ et le matériau de fibre creuse a une température de transition vitreuse Tg > 300 °C, de préférence Tg > 350 °C déterminée

selon le procédé indiqué dans la description.

**10.** Membrane à fibres creuses **caractérisée en ce qu'**elle comprend une fibre creuse de support comprenant un polyimide et une couche de séparation sur la surface extérieure du cylindre à fibres creuses comprenant un polybenzoxazole.

**11.** Membrane à fibres creuses selon la revendication 10, **caractérisée en ce que** la couche de séparation présente une épaisseur de 20 à 10 000 nm, plus préférablement de 100 à 3 000 nm.

**12.** Membrane à fibres creuses selon la revendication 10 ou 11, **caractérisée en ce que** la fibre creuse de support présente une perméance de 500 GPU $N_2$, de préférence dans la plage de 2 000 à 20 000 GPU $N_2$ et le matériau à fibres creuses présente une température de transition vitreuse Tg > 300 °C, de préférence Tg > 350 °C déterminée selon le procédé indiqué dans la description.

**13.** Membrane à fibres creuses selon l'une quelconque des revendications 10 à 12, **caractérisée en ce qu'**elle présente une perméance de $CH_4$ de 2 à 40 GPU, plus préférablement de 5 à 30 GPU et une perméance de $CO_2$ de 120 à 1 200 GPU, plus préférablement de 150 à 500 GPU et une sélectivité $CO_2/CH_4$ de gaz pur de 30 à 50, plus préférablement de 35 à 45, déterminée selon le procédé indiqué dans la description.

**14.** Membrane à fibres creuses selon l'une quelconque des revendications 10 à 13, **caractérisée en ce qu'**elle comprend une couche de gouttière comprenant une silicone entre la surface de la fibre creuse de support et la couche de séparation, ayant de préférence une épaisseur moyenne de 10 nm à 900 nm.

**15.** Membrane à fibres creuses selon la revendication 14, **caractérisée en ce qu'**une partie de la couche de gouttière est présente à l'intérieur de la fibre creuse de support et une partie de la couche de gouttière est à l'extérieur du support et les conditions suivantes sont satisfaites :

(i) la partie de la couche de gouttière à l'extérieur du support a une épaisseur moyenne (GLe) de 10 nm à 900 nm ; et
(ii) la partie de la couche de gouttière présente à l'intérieur du support a une épaisseur moyenne (GLi) de 10 % à 350 % de GLe.

**16.** Membrane à fibres creuses selon l'une quelconque des revendications 10 à 15, **caractérisée en ce qu'**elle est obtenue par un procédé selon l'une quelconque des revendications 5 à 9.

**17.** Utilisation d'une membrane à fibres creuses pour la séparation de fluides, de préférence la nanofiltration de solvants organiques ou la séparation de gaz, plus préférablement pour la séparation de $O_2$ et $N_2$ ou $CH_4$ de $CO_2$, plus préférablement $CH_4$ de $CO_2$, **caractérisée par** une membrane à fibres creuses selon l'une quelconque des revendications 10 à 16.

**18.** Procédé de préparation d'une solution avec les étapes suivantes :

a) fourniture d'au moins un alcool ;
b) fourniture d'un polyhydroxyamide ayant un poids moléculaire moyen en nombre $M_n$, déterminé selon le procédé indiqué dans la description, ledit poids moléculaire moyen $M_n$ allant de 10 000 à 120 000 g/mole ou de 35 000 à 70 000 g/mole, ledit polyhydroxyamide ayant un indice de polydispersité de 2 à 9 ou de 3 à 7 ;
c) dissolution dudit polyhydroxyamide dans ledit alcool, **caractérisé par** la solution selon au moins l'une des revendications 1 à 4, et dans lequel ledit au moins un alcool de l'étape a) est choisi dans le groupe constitué de l'isopropanol, du n-propanol et de l'éthanol.

**19.** Procédé selon la revendication 18, comprenant en outre l'étape :
d) filtration de la solution obtenue.

**20.** Procédé selon la revendication 18 ou 19, **caractérisé en ce que** la dissolution est effectuée sous agitation.

Fig. 1a

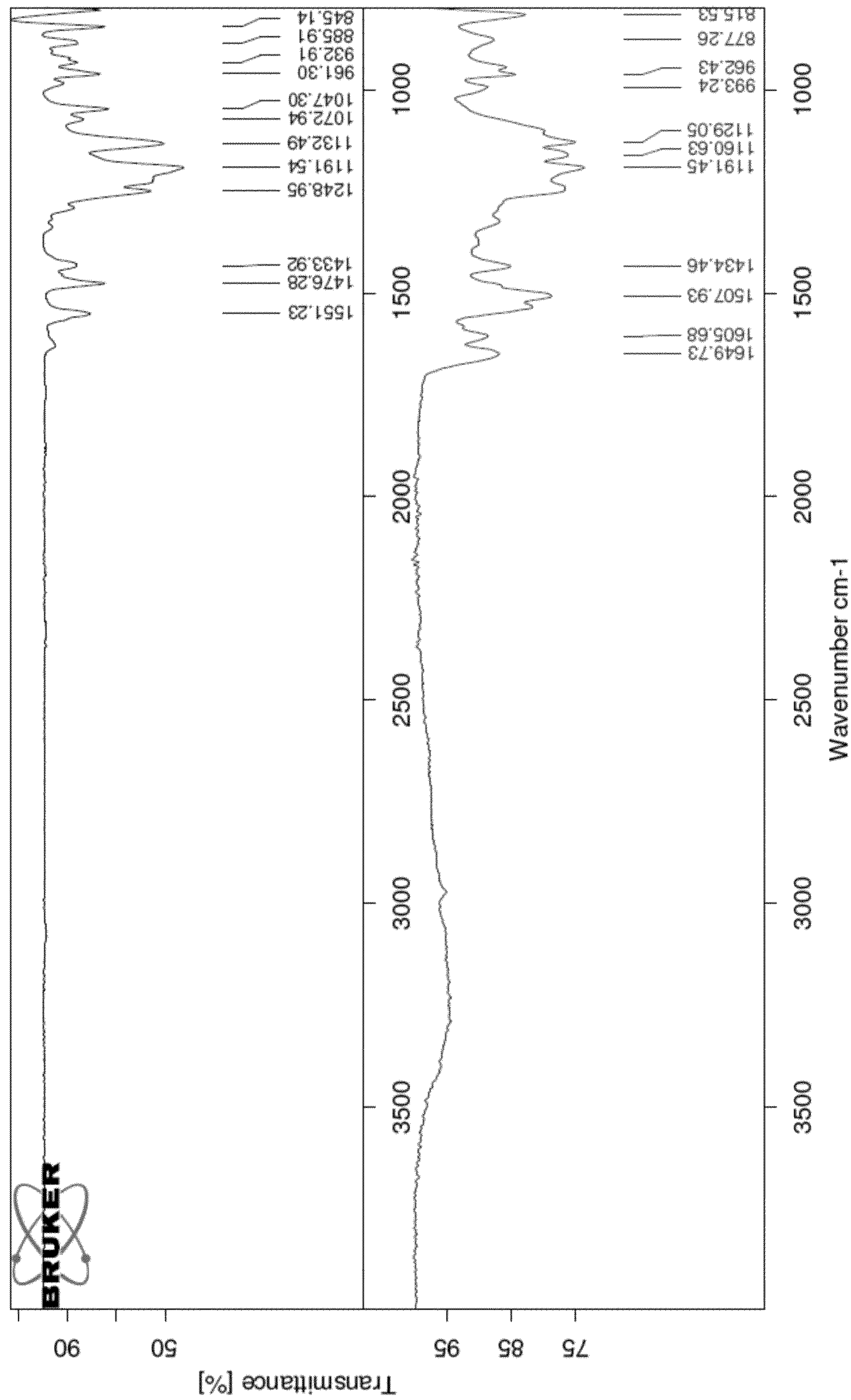

BRUKER
Transmittance [%]
90
50
95
85
75
Wavenumber cm-1
1000
1500
2000
2500
3000
3500
845.14
885.91
932.91
961.30
1047.30
1072.94
1132.49
1191.54
1248.95
1433.92
1476.28
1551.23
815.53
877.26
962.43
993.24
1129.05
1160.63
1191.45
1434.46
1507.93
1605.68
1649.73

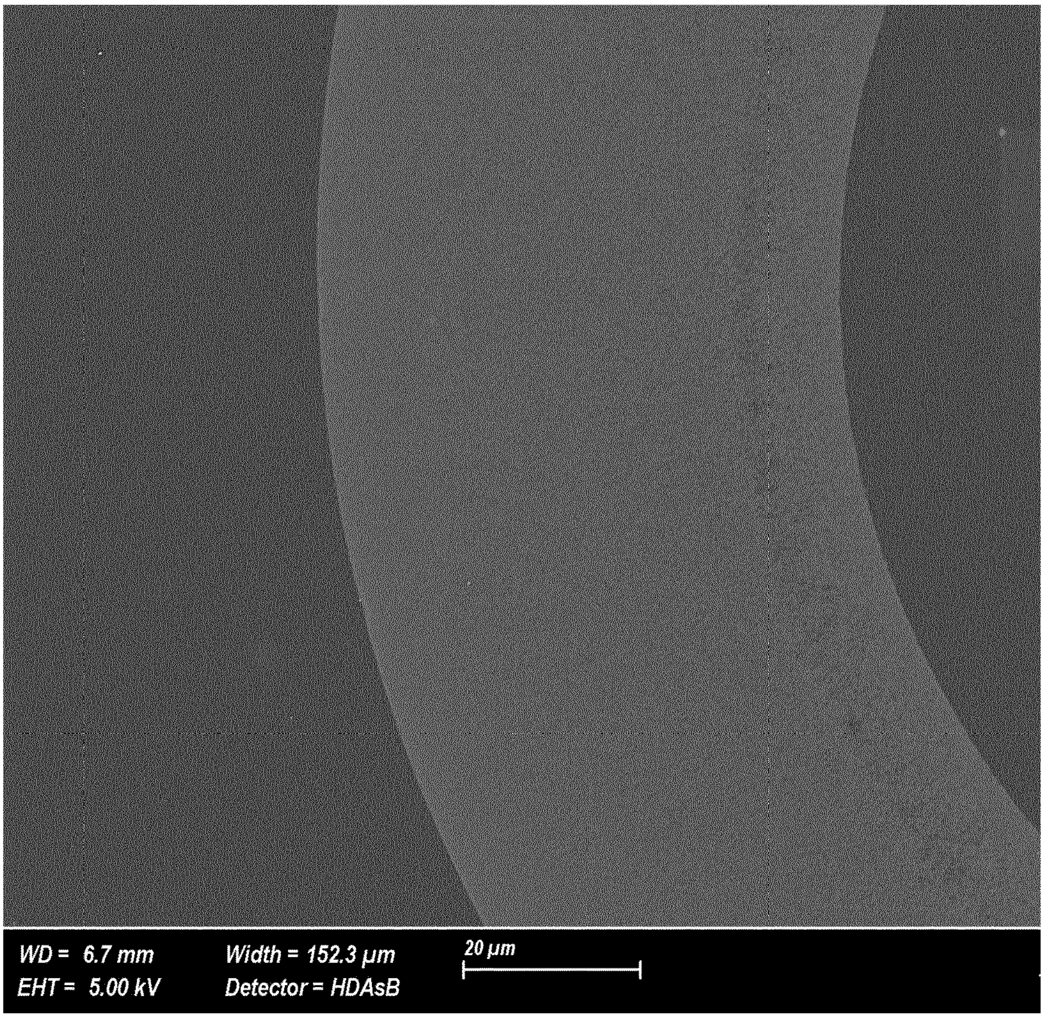


Fig. 2a

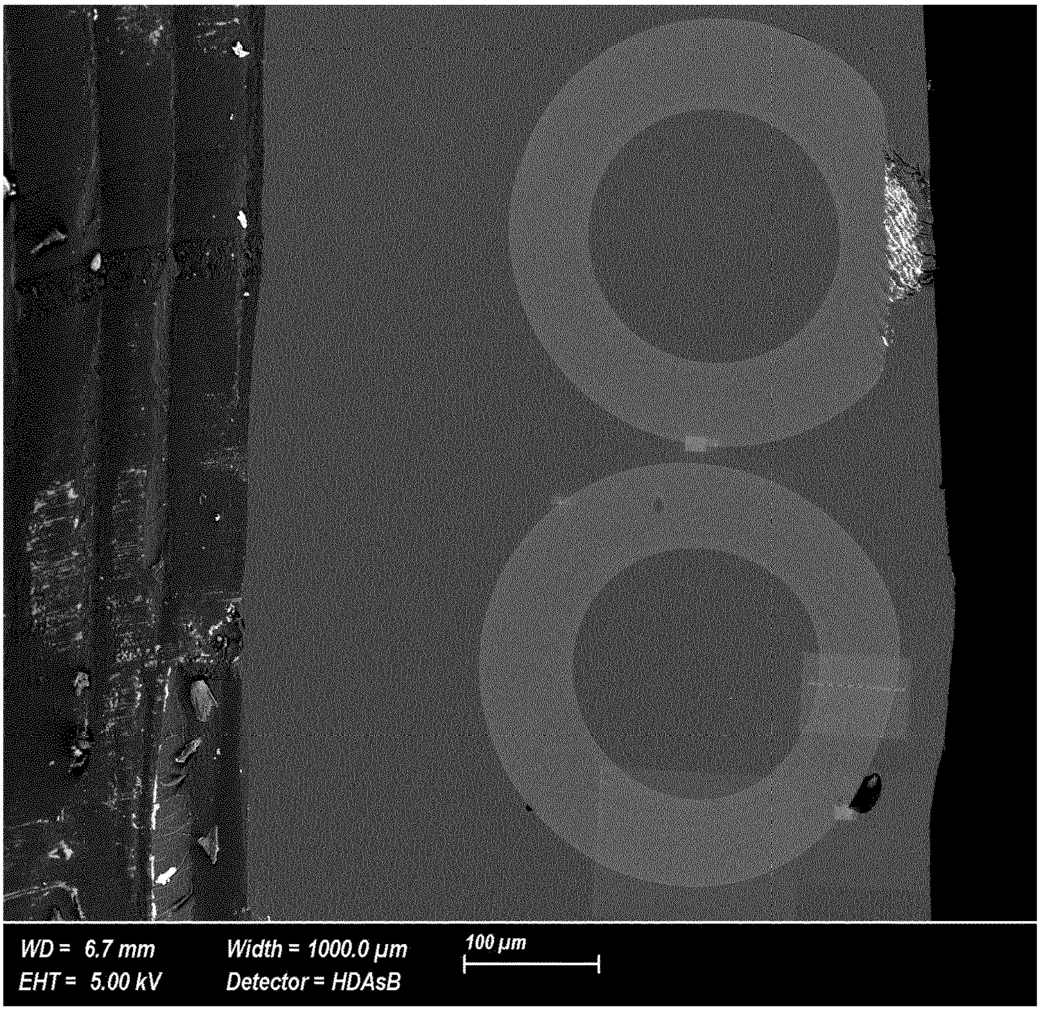


Fig. 2b

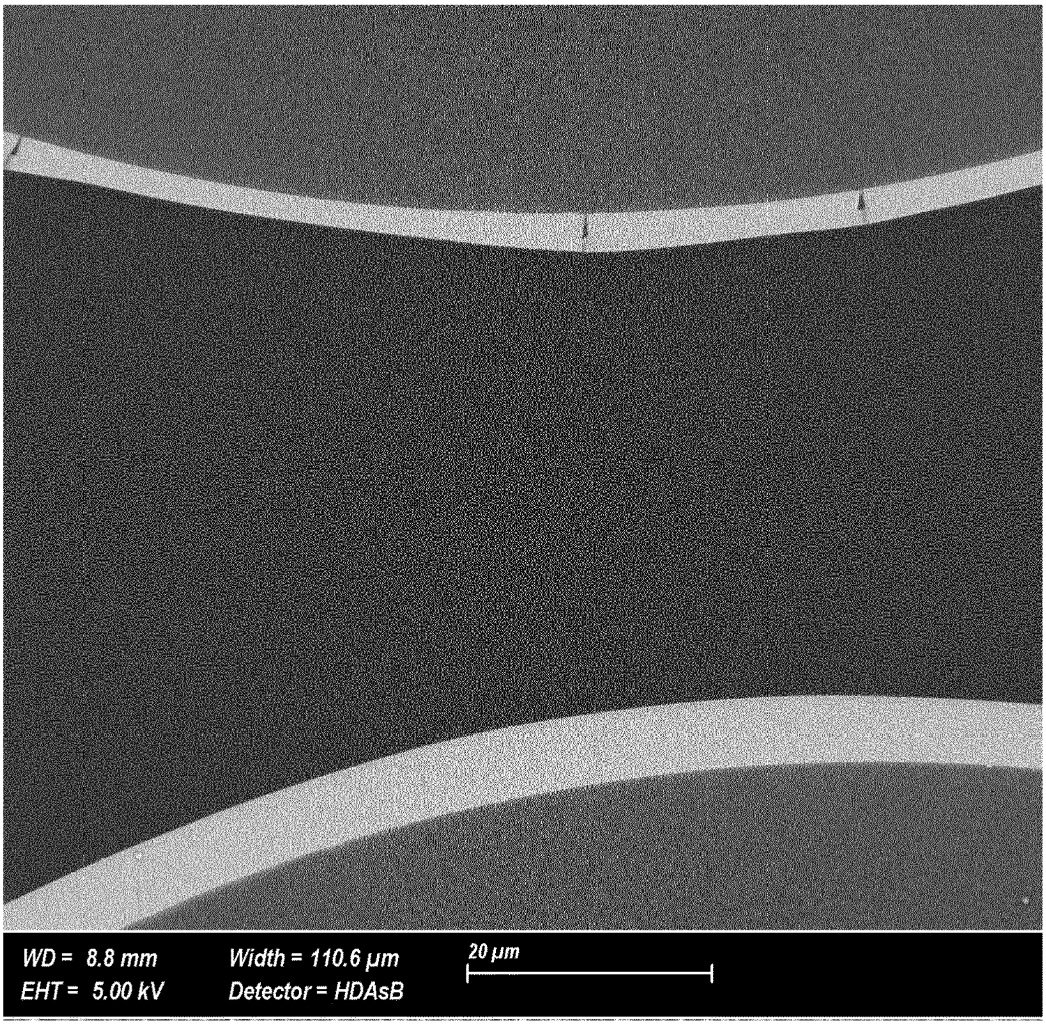


Fig. 2c

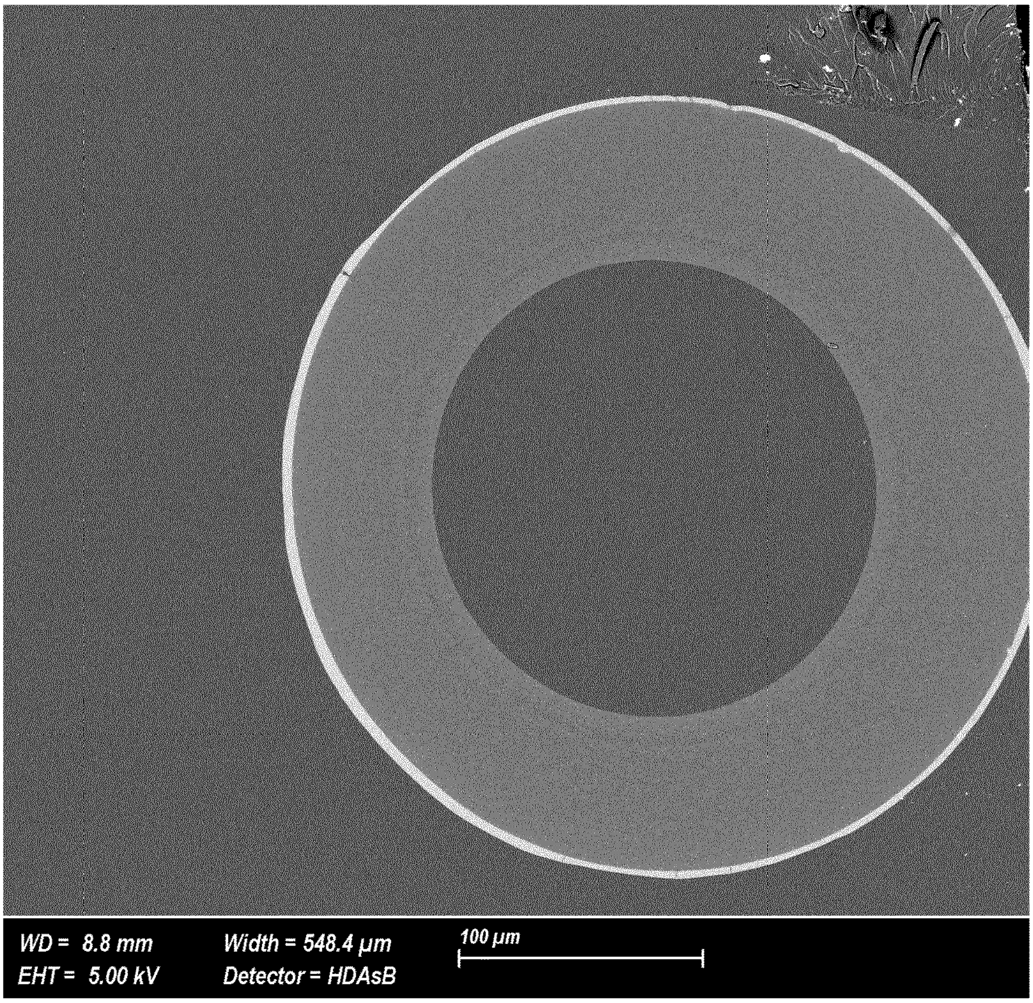


Fig. 2d

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20110009506 A1
- WO 2016120189 A1
- US 201200305484 A1
- US 20130047844 A1
- US 20100326913 A1
- US 20100331437 A1
- US 20100133188 A1
- JP S43002475 B
- US 8618244 B2
- US 20120123079 A1
- US 20160317981 A1
- US 20160144323 A1
- US 2017166699 A1
- WO 2011009919 A
- WO 2014202324 A
- WO 2014202324 A1
- US 2016144323 A
- US 10040036 B2


### Non-patent literature cited in the description


- *JMS*, 2015, vol. 474, 122-131
- **YOUNG MOO LEE**. *JMS*, 2011, vol. 385-386, 86-95
- **TAI-SHUNG CHUNG**. *Polymer*, 2011, vol. 52, 5127-5138
- **TAI-SHUNG CHUNG**. *Reactive and functional polymers*, 2018, vol. 127, 38-47
- Synthesis and Thermal Properties of Aromatic Poly(o-hydroxyamide)s Containing Phenylene Diimide Unit. **LEE, E.-J.** ; **YOON, D.-S.** ; **CHOI, J.-K.** Journal of the Korea Academia-Industrial cooperation Society. The Korea Academia-Industrial Cooperation Society, 30 November 2013
- **SHENG-HUEI HSIAO** ; **LIANG-RU DAI**. Synthesis and Properties of Novel Aromatic Poly(o-hydroxy amide)s and Polybenzoxazoles Based on the Bis(etherbenzoyl chloride)s from Hydroquinone and Its Methyl-,tert-Butyl-, and Phenyl-Substituted Derivatives. *Journal of Polymer Science: Part A: Polymer Chemistry*, 1999, vol. 37, 2129-2136
- *Macromolecules*, 2010, vol. 43, 7657-7667
- **YOUNG MOO LEE**. Effects of diverse imidization routes on physical properties and gas transport behaviors. *Macromolecules*, 2002, vol. 35, 905-911